# EUROPEAN PATENT APPLICATION

(11) **EP 1 262 214 A2**
(43) Date of publication of application: **04.12.2002**
(21) Application number: 02253831.8
(22) Date of filing: 30.05.2002
(51) Int. Cl.: A63F 13/10, A63F 13/12

(54) **Electronic gaming system**

(30) Priority: 31.05.2001 GB 0113218
(71) Applicant: Nokia Corporation, 02150 Espoo (FI)
(72) Inventor: Emmerson, Francis, Windsor, Berkshire SL4 3ED (GB); Sharp, Jonathan, Sunningdale, Berkshire SL5 0BB (GB); Thomas, Graham, Camberley, Surrey GU15 1QS (GB); Seligman, Kym, Wokingham, Berkshire RG40 5PG (GB)
(74) Representative: Haws, Helen

(57) **Abstract**

The present invention concerns an electronic image puzzle generating and solving system comprising: means for providing an electronic image, input means for inputting one or more predetermined scrambling/unscrambling criteria, scrambling means for scrambling/unscrambling said electronic image in accordance with said one or more predetermined scrambling criteria to provide a scrambled/unscrambled electronic image.

The invention provides an image based electronic puzzle game that allows for a user to receive and solve new puzzles, download new puzzles, and for a user to create his/her own puzzles to send to friends, or post on a central server. Thus, the present invention advantageously provides content for engaging a user, and also a way for a user to create content, as well as a way for a user of sending pictures and messages.

## Description

The present invention relates to electronic games, in particular electronic games in the context of mobile gaming.

The present invention, in one aspect resides an electronic image puzzle generating system comprising: means for providing an electronic image, input means for inputting one or more predetermined scrambling criteria, scrambling means for scrambling said electronic image in accordance with said one or more predetermined scrambling criteria to provide a scrambled electronic image.

In this context, scrambling criteria includes any algorithm or any other form of data in the form of a series of image manipulations or clues/questions that are designed to be applied to puzzle gaming parameters so as to change predetermined attributes of the puzzle gaming parameters.

By means of the invention, there is provided an image based electronic puzzle game that allows for a user to receive new puzzles, download new puzzles, and for a user to create his/her own puzzles to send to friends, or post on a central server. Thus, the present invention advantageously provides content for engaging a user, and also a way for a user to create content, as well as a way for a user of sending pictures and messages.

There may be monitoring and accounting means for monitoring use of the present invention for computing a payment to be made by the user.

The invention from another aspect provides a client-server system for downloading games content, the games content comprising an electronic image puzzle comprising: input means for inputting one or more scrambling/unscrambling criteria, scrambling means for scrambling/unscrambling said electronic image puzzle in accordance with said one or more scrambling/unscrambling criteria.

Accordingly, the invention extends to areas concerned with client-server systems and the downloading and more generally enabling the provision of content for a client terminal.
Other aspects and features of the invention are defined in the appended claims.

In order to aid a better understanding of the present invention, an embodiment of the invention will now be described. This should not be construed as limiting the invention but merely as an example of a specific way of putting the invention into effect. In particular, the invention will be described with reference to the accompanying drawings in which:
Figure 1 is a schematic of client-server system in accordance with a preferred arrangement of the present invention;
Figure 2 is a schematic representation of one embodiment of the present invention;
Figure 3 is a schematic representation of another embodiment of the present invention; and
Figure 4 is a schematic representation of a further embodiment of the present invention.

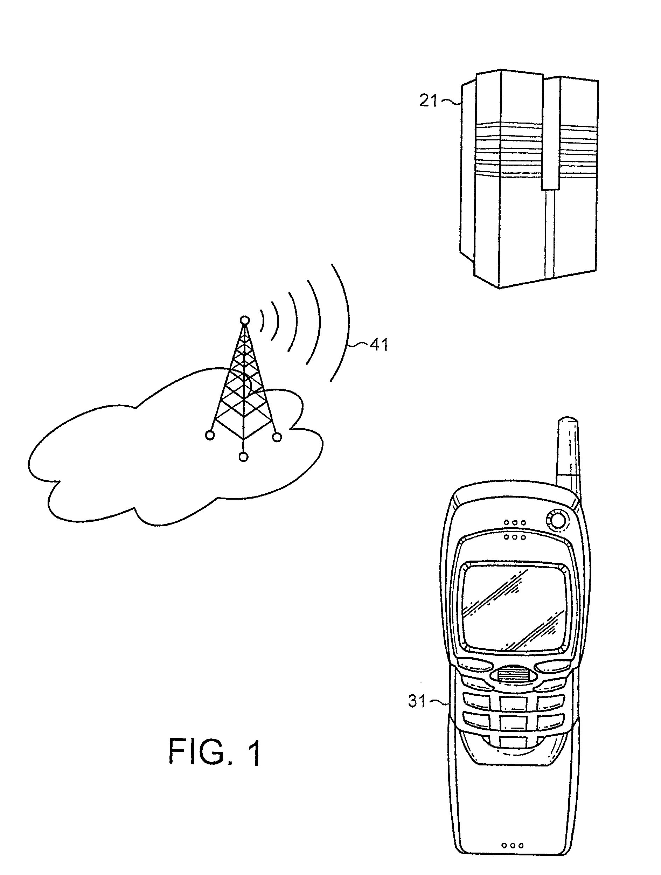

Figure 1 outlines three entities of the present invention, namely a server 21 that holds content for downloading, an end user's mobile phone 31 that is able to download the content, and an operator network 41 that provides a telecommunications service to the mobile phone 31. The server 21 has a unique URL address and using this can be accessed by the end user through the mobile phone 31 which may be WAP, iMODE or 3G enabled.

In the following example, reference will be made to mobile gaming and games content for a mobile phone platform, although the invention is in no way intended to be limited to mobile gaming.

Mobile gaming is a term used to refer to all aspects of electronic games in the context of mobile communications. It is not uncommon nowadays for mobile phones to have, pre-loaded on a memory of the phone, content relating to one or more electronic games. The games can be played on the mobile phone using the phone's processor to run the game and through the phone's User Interface (UI) normally involving the use of the display and one or more of the keys. In order to play a game, the end user navigates through the phone's various main menu options to the Games option and then selects the particular electronic game he or she wishes to play. Certain keys of the mobile phone's keypad will be pre-assigned for enabling the end user to control certain predetermined features of the game, usually in relation to other features of the game which are under the control of the software of the game. In this way, the end user can be regarded as playing 'against the computer'. Additionally, in a two (or more) player game, each end user (player) has control over his/her particular game's characters or features with which he/she plays against the other player(s).

Typically, an electronic game that is designed to be played on a mobile phone platform is created by a content provider, who may be the mobile phone manufacturer or a third party. Like any platform wishing to run games software of an electronic game, the mobile phone takes advantage of its memory and processor. The electronic game function comprises a games engine that provides the general functions of the game including instructions and routines for gameplay, for example by drawing of library functions that define how games characters may interact during game play. The electronic game also has gaming parameters that set out the environmental factors that define the backdrop to the game. Then there are gaming parameters relating to characters of the games, these being entities of the game under user control and with which the user during gameplay associates himself, for instance a team in a sports game, or a fighter in a combat game. In the games content, a combination of these factors define the look and feel of the game, its characters, its objectives, its rules of operation.

In order to afford variation in gameplay, in-built into the games software, typically, is the ability to have different levels of gameplay ranging in complexity. This is usually implemented in the software by making changes to characters, features, aspects and other parameters of the basic gameplay. The content provider may additionally create new levels and/or versions for the game. When new levels and/or versions are applied to the game it modifies the games content. Modified games content has associated with it an identifier tag that identifies the version that has been used in its construction.

In the context of a preferred form of the present invention, the content provider continues to design and develop more challenging and innovative image puzzle games, whilst the user will continue to remain interested and engaged. In addition, the mobile phone manufacturer or content provider benefits in increased traffic and stimulating content for the mobile phone manufacturer's internet site.

The mobile phone manufacturer may embed the games content onto the phone during manufacture, or authorise downloading of the games content onto the phone. Thus, the user of the mobile phone is equipped for mobile gaming.

The present invention, in a specific form, consists in content for mobile gaming comprising an electronic image puzzle game. The electronic image puzzle games content comprises software that is executable by the games engine.

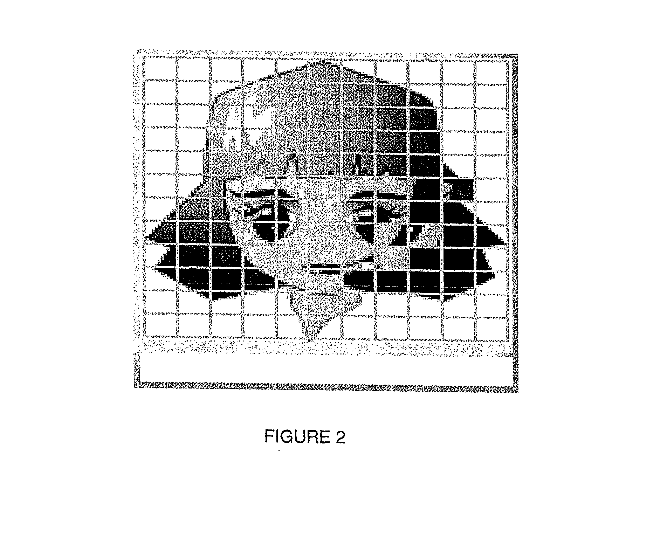

One form of the puzzle game comprises a sliding image puzzle game that can be displayed on a phone's display as indicated in Figure 2. In this form of the invention, the image puzzle consists of a grid made up of an array of tile image pieces consisting of blocks of pixels, with one empty grid position representing one absent tile. In the image puzzle the array of tile image pieces are scrambled, in other words the tile image pieces are disordered such that the image presented by the array of tile image pieces does not represent a coherent and completely identifiable image.

A sliding image puzzle may be created by a content provider (in the traditional sense), or it may be created by an end user. The sliding image puzzle may be created in a variety of different ways using features of the image puzzle software executable by the games engine.

In the case of a content provider, the present invention facilitates the creation of a sliding image puzzle by taking a given image to be scrambled and applying to it a pre-defined set of scrambling codes or data using the image puzzle software. Thus, in this form of the invention, the invention provides for first dividing the image up into a predetermined grid array of tile image pieces and then applying scrambling data to the array of tile image pieces to scramble the tile image pieces in a manner that can be defined by the content provider using the image puzzle software, so as to output a disordered image. The content provider then places the scrambled image on a server for downloading to, or by, an end user.

In the case of an end user wishing to create a sliding image puzzle, the present invention enables an end user through operation of his mobile phone to create an image puzzle. In this form of the invention, the image puzzle game provides image puzzle software stored in the phone and executable by the games engine and UI features to be used in conjunction with the image puzzle software and under its control. The end user can create an image puzzle using the image puzzle software and the associated UI features. The image puzzle software facilitates either manually or automatically scrambling of a user selected image. In the manual mode of operation, the end user chooses the grid dimensions of the tile array to be created and then scrambles the image manually by defining the moves required to scramble the image by moving the tiles around using the buttons on the mobile phone's keypad. Alternatively, the end user may simply choose the number of moves by which the image is to be scrambled and then letting the image puzzle software apply a scrambling algorithm to scramble the image automatically in a random fashion.

The difficulty level of an image puzzle created using this form of the invention, may be increased by having a grid dimension in which more tiles need to be rearranged. The degree of disorder may be increased too, thus requiring more steps that need to be reversed in order to solve the puzzle.

Having created an image puzzle of the sliding tiles format, the end user can either send the image puzzle to a friend as a challenge for his friend to solve, or the end user may post the image puzzle on a pre-defined server for downloading by other users.

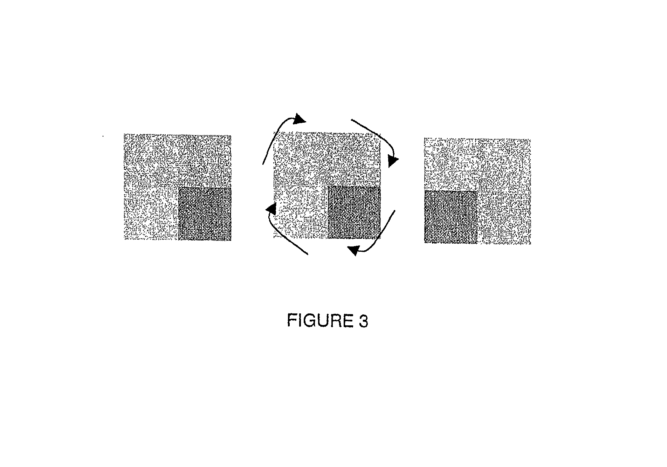

In order to solve an image puzzle created using the sliding tile embodiment, the present invention provides that the image puzzle software stored on a mobile phone is operable by an end user along with associated UI features to unscramble an image puzzle. Conveniently, the UI may utilise the keypad of the phone comprising a matrix of 4 rows of keys by three columns of keys. Alternatively the UI may be provided in the form of a touchscreen. Additionally, the UI may included a joystick. When an end user is faced with a scramble image which he wishes to solve, he operates the UI features to move the image tiles around screen until the puzzle is solved. More specifically, the image puzzle displays a blank tile space and the end user can select an adjacent tile for movement by highlighting the selected tile and then operating the UI to slide the selected tile to occupy the adjacent blank tile space, thereby leaving vacant a tile space at the location where the selected tile previously occupied. The end user selects another tile and slides this into the new blank tile space. Tile movement is either up and down or from side to side. Optionally, the game may provide for diagonal movement. Two or more tiles can be moved in any one move, provided both are moved in the same direction, and one of the moved tiles takes up the blank tile space. After a succession of correct moves a recognisable image is revealed and thus the image is unscrambled.
In a second form of the invention, the image puzzle game comprises a rotation image puzzle game (see Figure 3). This can be used by a content provider to create an image puzzle, or the puzzle game can be provided in the mobile phone for the end user to create a puzzle. For example, the end user uses a cursor to select a block of tiles in a 2x2 array. In one implementation, by pressing an action button this causes rotation of all of the pieces one square in a clockwise direction. Figure 3 shows that the image is tiled and then scrambled using that rotation method, the user choosing the number of scrambling moves. The end user can again send this image puzzle to a friend or post it on the server.

In a third form of image puzzle game of the present invention, an electronic image is scrambled on the basis of a series of questions or clues. In this embodiment, image puzzle software comprising an encryption algorithm is provided in order to scramble an image. Keywords or responses associated with the series of questions/clues are used as part of the encryption process. As with each form of the present invention, the question image puzzle game can be created by a content provider or an end user.

In the context of a content provider, a question image puzzle may be created by scrambling a given image using an encryption algorithm supplied with a series of questions by the content provider. In this context, the questions would need to be of general, public nature in the sense that the answers ought to be in the public domain and accessible by the public. For instance, the image puzzle may be related to a musical pop band, for example S Club 7. In this example, the image to be scrambled could be of the pop band S Club 7, and the encryption algorithm may be supplied with the following questions and answers:
Question 1 - What is the band's latest Number 1 hit?
Keyword = Don't Stop Movin'.
Question 2 - How many members are in the band?
Keyword = 7
Question 3 - What was the name of their first album?
Keyword = S Club.

The image is scrambled and the key to unscrambling the scrambled image of the pop band are the correct responses to the three questions.

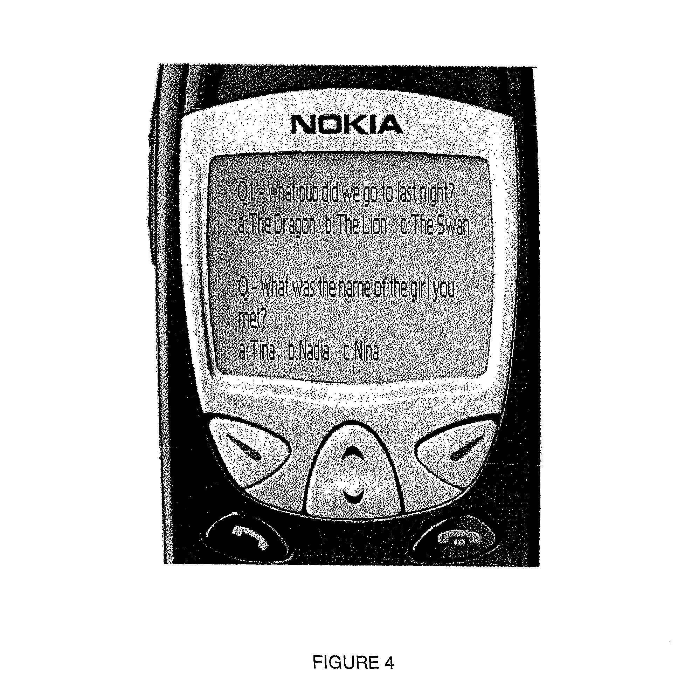

In the context of an end user wishing to create a question image puzzle, the image puzzle software is provided on the mobile phone in association with the games engine. The image puzzle software allows for an end user to choose how many scrambling questions he would like to use in generating the image puzzle. The end user is then prompted to enter the questions and the keywords that will be used by the encryption algorithm for scrambling an image on the mobile phone. The questions and answers may be of a personal type if the end user is intending sending the puzzle to a friend. For example and referring to Figure 4,
Question 1 - What public house did we go to last night?
Keyword = The Dragon
Question 2 - How many pints of lager did you drink?
Keyword = 8
Question 3 - What was the name of the girl with the blue t-shirt?
Keyword = Nadia
Question 4 - How angry was your girlfriend when you came in at 4.30am?
Keyword = Furious

Each of these words/numbers is used as a key for an encryption process that scrambles an image selected by the end user. The result is a random mess of pixels and colours so the recipient (player) of the question image puzzle will have no way of knowing what the image is at the start.

In playing the game, a recipient player is prompted with these questions. As each question is answered correctly, so the scrambled image becomes progressively unscrambled, and each time the player may have a better anticipation of the what the final image will be of . If all four questions are answered correctly the image is fully unscrambled to reveal the image originally selected by the end user. The answers may be keyed in manually by the player, or may be answered using multiple choice keys (as illustrated in Figure 4), or could be straight Yes/No answers depending on the choice of format.

If the recipient player enters an incorrect answer, the player could be informed that he has answered incorrectly, and/or the scrambled image remains scrambled.

Alternatively, the software could be configured such that the player only knows if he has answered one or more of the questions incorrectly once he has answered all the questions and the scrambled picture still has not revealed itself. Alternatively, as this might be frustrating, the software could be configured so that after each response the player is informed whether he has answered correctly or not. This functionality could be set into a puzzle by the end user who has created the puzzle before sending the puzzle (e.g. "Reveal if answer correct after each question? Yes/No"). Skill levels for each puzzle could be based upon the complexity of the questions/clues that need to be solved. Difficulty is increased by making the clues more complicated.

In embodiments of the present invention in which the end user creates the image puzzle for sending to a friend or posting on a server, the mobile phone can be equipped with a image capturing device such as a camera. Alternatively, or in addition, the mobile phone may download an image from a website or a wap site. Where the image puzzle is provided on a server by a content provider the image puzzle could form part of a promotion in which the image is a promotion of for instance a film or music or other form of advertisement. Thus, the puzzle graphics could be for instance stills from films to cartoon images to pictures of player's pets.

All embodiments of the image puzzle game could have a time trial mode such that a time limit is placed on solving the puzzle. The timer could take the form of an animated or audio timer (e.g. tick tock of a clock counting down). The games could further include background music.

Furthermore, the present invention extends to provide for a number of different ways of making the image puzzle game available for playing, and also various different modes of competition.

As already indicated, it is possible for a content provider or an end user to provide an image picture puzzle on a server for downloading. It is also possible for one end user to send a picture puzzle to another end user.

In a downloading context, a player may download an image puzzle from a server, solve the puzzle and then send the correct unscrambled image back. If he is the first player to do this then he may be entitled to a prize. Additionally, best times for completing the puzzle could be posted. In another arrangement, the first person to solve a picture puzzle may be able to send and submit his own puzzle. At the end of a predetermined time period (e.g. a month) the person whose puzzle has taken the longest to solve may win a prize.
In the send to a friend mode, a user can create a picture puzzle and send the puzzle via the communication network to a friend. In this mode the user can attach a message to the puzzle before sending it.

Downloading of puzzle games from a server is carried out by the end user making an initial request for a game download from the server 21 via the operator's network 41. The server 21 holds files of specific type containing the games data. Selecting one of those files results in the download of the file to the mobile phone. The downloading process uses a series of verification processes. After validation by the games engine and the game itself by means of verification, security and authentication process the games data file is installed to the mobile phone's permanent memory.

Alternatively, the user may be pushed the puzzle game from the server if the user subscribes to the relevant service.

The system may provide for restrictions to be built into in the distribution of the puzzle games. A code or flag associated with the puzzle game may be provided to enable or disable the circulation of a puzzle game. In this way, a particular player may be able to download and use an image puzzle but may be prevented from further distribution unless authorised. Authorisation may be permitted on payment of a fee.

Advantageously, the system provides for the operator to set up revenue generating computations means for determining the number of downloads and uploads by a particular user in relation to a puzzle game and thus the charge to be made to the user will be based on this calculated number.

Transfer of signals between the user's mobile phone and the server may use any appropriate modes date transfer modes such as WAP, SMS, 3G as well as wired networks.

The present invention may be embodied in other specific forms without departing from its essential attributes.

Reference should thus be made to the appended claims and other general statements herein rather than to the foregoing description as indicating the scope of the invention.

Although the present invention is based around the concept of image manipulation, the present invention extends to puzzles not having a picture content. For instance a user may create a puzzle by using a series of questions and then sending this to another user with an attached prize which may be an audio file, so that when the receiving user receives the series of questions and if he answers the questions correctly the prize would be an audio file that is played by the phone. Alternatively, the prize could simply be a voice message, or an image file or some other media file. Thus the present invention extends to provide for manipulation of different types of media in addition electronic images.

Furthermore, each feature disclosed in this specification (which terms includes the claims) and/or shown in the drawings may be incorporated in the invention independently of other disclosed and/or illustrated features. In this regard, the invention includes any novel feature or combination of features disclosed herein either explicitly or any generalisation thereof irrespective of whether or not it relates to the claimed invention or mitigates any or all of the problems addressed.

The appended abstract is file herewith is included in the specification by reference.

## Claims

1. An electronic image puzzle generating system comprising:
means for providing an electronic image,
input means for inputting one or more predetermined scrambling criteria,
scrambling means for scrambling said electronic image in accordance with said one
or more predetermined scrambling criteria to provide a scrambled electronic image.

2. A system according to claim 1, wherein the one or more predetermined scrambling criteria comprise one or more questions.

3. A system according to claim 1 or claim 2, wherein the scrambling means is provided on a portable radio communication device comprising a UI and the predetermined criteria are defined by an end user using the UI.

4. A system according to claim 3, comprising means for transmitting a scrambled electronic image, wherein the end user transmits the scramble image to another end user.

5. A system according to claim 3, comprising means for transmitting a scrambled electronic image, wherein the end user transmits the scramble image to a server.

6. An electronic image puzzle solving system comprising:
image receiving means for receiving a scrambled image puzzle,
input means for inputting one or more unscrambling criteria,
unscrambling means for unscrambling said electronic image in accordance with said one or more unscrambling criteria to provide an unscrambled electronic image.

7. Electronic game image puzzle system comprising input means for inputting one or more criteria,
unscrambling means for unscrambling the image in accordance with said one or more unscrambling criteria,

8. A method of generating an electronic image puzzle comprising:
providing an electronic image,
specifying a predetermined scrambling criteria,
scrambling said electronic image in accordance with said predetermined scrambling criteria.

9. A method of solving an electronic image puzzle comprising:
receiving a scrambled electronic image,
specifying a unscrambling criteria,
unscrambling said scrambled electronic image in accordance with said unscrambling criteria.

10. A client-server system for downloading games content, the games content comprising an electronic image puzzle comprising:
input means for inputting one or more scrambling/unscrambling criteria,
scrambling means for scrambling/unscrambling said electronic image puzzle in accordance with said one or more scrambling/unscrambling criteria.

11. A gaming device including games content for an electronic image puzzle, and adapted to download content from a server, the device having a memory for storing the games content, and a controller for processing the games content, the controller being operable to input one or more scrambling/unscrambling criteria, scramble/unscramble said electronic image puzzle in accordance with said one or more scrambling/unscrambling criteria.

12. A gaming device according to claim 11, wherein the device is a handheld electronic device.

13. A gaming device according to claims 11, or 12, wherein the device includes a transceiver and the games content is transmitted by signals over the air.

14. A computer program product on a carrier having an electronic puzzle game stored on a memory thereof, the product enabling applying one or more scrambling/unscrambling criteria to the puzzle game and scrambling/unscrambling said electronic image puzzle in accordance with said one or more scrambling/unscrambling criteria..

15. A computer program product on a server, the product enabling an electronic puzzle game stored on a memory thereof to be downloaded therefrom by an end user, the downloaded electronic puzzle game comprising coded data to be unscrambled by the end user.

16. Apparatus for providing for content for an electronic game platform, the content comprising an electronic image that is scrambled and a set of clues to allow for unscrambling of the scrambled image.
